# FASCICULE DE BREVET EUROPEEN

(11) **EP 0 486 740 B1**
(45) Date de publication et mention de la délivrance du brevet: **03.04.1996**
(21) Numéro de dépôt: 90403273.7
(22) Date de dépôt: 20.11.1990
(51) Int. Cl.: B29C 51/22

(54) **Machine de thermoformage de matières plastiques**
Maschine zum Warmformen von Kunststoffen
Machine for thermoforming plastic materials

(43) Date de publication de la demande: 27.05.1992
(73) Titulaire: MONOPLAST S.A., F-40140 Soustons (FR)
(72) Inventeur: Charpentier, Gérard Jean-Marie, F-40140 Soustons (FR)
(74) Mandataire: Viard, Jean

(56) Documents cités:
- EP-A- 0 265 599
- FR-A- 2 225 263
- FR-A- 2 308 484
- FR-E- 76 346
- US-A- 3 418 691
- US-A- 4 086 045
- US-A- 4 244 915

## Description

La présente invention a pour objet une machine de thermoformage de matières plastiques destinée en particulier, mais non exclusivement, à permettre l'association de matériaux hétérogènes.

L'idée d'utiliser des propriétés physiques des matières plastiques pour obtenir des récipients en déformant une bande ou feuille plastique préalablement ramollie par la chaleur par pression, ou par dépression est connue depuis très longtemps. Si la géométrie des produits obtenus par thermoformage dans un moule est satisfaisante, le problème de la décoration de la paroi latérale extérieure et éventuellement du fond reste difficile.

Il a déjà été proposé par un EP-A- 83 107 545 de former des récipients composites dont la paroi externe est constituée par une feuille de carton décorée, cette feuille de carton étant tapissée intérieurement par une feuille de matière plastique appliquée par soufflage ou par emboutissage profond. Ainsi, l'enveloppe extérieure à base de papier de carton ou tout autre matériau approprié assure la rigidité dimensionnelle alors que la matière plastique très mince sert pour l'essentiel à assurer l'étanchéité du récipient au liquide. Les matières les plus couramment utilisées sont : le polystyrène, le chlorure de polyvinyle ou le polypropylène. Au cours de l'emboutissage, on obtient un collage à chaud entre la couche de carton et la couche de matière plastique. Bien entendu, la forme du manchon de carton correspond, au moins approximativement, à la forme extérieure du récipient que l'on désire obtenir. Mais, un tel procédé n'est appliquable que lorsque la forme du récipient est relativement simple.

Les étiquettes lorsqu'elles sont introduites à plat dans la machine doivent subir, dans certains cas, différents pliages successifs pour être conformées selon un volume déterminé. Cette suite de pliages ne peut pas être effectuée dans la machine ci-dessus.

FR-A-2 225 263 décrit également un dispositif de fabrication d'objets par emboutissage profond comprenant une table tournante horizontale tournant pas à pas et comportant plusieurs moules permettant de former une feuille plastique dans un gobelet intérieur au moule. Mais le gobelet est introduit déjà conformé dans le moule.

De plus, ce procédé présente des inconvénients notamment en ce que, une fois que le corps du récipient a été thermoformé par des procédés de soufflage, de vide ou de pistonage connus, il faut en découper la partie supérieure pour obtenir un contour de configuration exactement déterminée, en particulier lorsque le récipient présente à sa partie supérieure une collerette. Cette opération nécessite des presses puissantes. Par ailleurs, dans le thermoformage des emballages composites, les chutes provenant des détourages ne sont pas recyclables dans la mesure où il s'agit de matériaux différents. Enfin, dans le thermoformage classique il existe des phénomènes parasites liés à l'orientation de la feuille. En effet, la formation d'une telle feuille conduit à des tensions internes directionnelles qui, conjuguées à la force exercée pour l'entraînement de la feuille, produisent des résultats aléatoires.

Est connue par US-A-4 244 915 une machine de thermoformage de récipients en matière plastique, qui divulgue l'idée d'utiliser la pesanteur pour le déplacement d'une feuille thermoplastique molle. La feuille descendant verticalement à la sortie de l'extrudeuse est entraînée entre deux plateaux tournants ce qui nécessite un renforcement de l'épaisseur des bords et par suite des tensions nouvelles par rapport à celles qui résultent de l'extrusion.

Mais cette machine n'est pas adaptée au formage à l'intérieur d'une étiquette.

FR-A-2 308 484 sur lequel se base le préambule de la revendication indépendante 1, décrit un dispositif de formage d'une feuille thermoplastique comprenant un plateau vertical, tournant pas à pas, devant lequel est amenée la feuille, le plateau portant au moins trois moules en creux, des moyens de soufflage et/ou aspiration correspondent avec un poste d'introduction d'étiquettes. La machine décrite ne permet pas de réaliser un pistonnage sous haute pression.

La présente invention a pour objet une machine de thermoformage palliant ces inconvénients.

Selon la présente invention, la machine de thermoformage de matières plastiques comprenant des moyens d'amenée et de chauffage d'une feuille thermoplastique devant un plateau vertical tournant autour d'un axe horizontal portant au moins une matrice, et des moyens pour appliquer la feuille à l'intérieur de la matrice, le plateau tournant pas à pas devant une pluralité de postes de travail dont un poste d'introduction d'étiquettes, le plateau comprenant un centre à partir duquel s'étendent des branches radiales, chacune des branches portant au moins une matrice, est caractérisée en ce que la feuille thermoplastique est chauffée horizontalement et après passage sur un rouleau tombe sous son propre poids entre un piston de formage, animé d'un mouvement alternatif, et le plateau.

Ainsi, il est possible d'introduire dans la matrice par exemple une étiquette, à plat et de la conformer avant que le thermoformage de la feuille plastique qui défile entre la matrice et le piston ne se produise. C'est-à-dire que le moule ou matrice est porté par une sorte de barillet qui se déplace selon un pas angulaire déterminé.

Selon une autre caractéristique de l'invention, l'axe de rotation du plateau est perpendiculaire à la direction de déplacement de la feuille, une contre-piston animé d'un mouvement alternatif horizontal sous l'action d'un vérin étant appliqué contre le plateau en synchronisme avec le mouvement du piston.

L'existence de branches radiales permet de diminuer l'inertie du plateau tournant et facilite l'introduction des différents composants. Par contre, l'inertie étant diminuée il est nécessaire d'équilibrer la pression du piston par la poussée d'un contre piston de manière à ce que, aucune force importante ne soit transmise sur l'axe de rotation, le contre piston appliqué sur la branche radiale avançant simultanément au mouvement d'avancée du piston. Ainsi, l'entraînement en rotation du plateau autour de son axe horizontal ne demande qu'une énergie réduite.

La feuille préalablement chauffée descend devant le poste du thermoformage sous son propre poids après que toutes les tensions notamment dues à la formation de la feuille aient été relachées. On obtient ainsi, des produits thermoformés d'une qualité remarquable même avec des formes d'étiquettes très complexes.

D'autres caractéristiques et avantages de l'invention apparaîtront au cours de la description qui va suivre d'un mode particulier de réalisation, donné uniquement à titre d'exemple non limitatif, en regard des dessins qui représentent :
- La figure 1, une vue schématique en élévation d'une machine selon l'invention ;
- La figure 2, une vue de face du plateau tournant ;
- La figure 3, une vue partielle par-dessus de la machine.

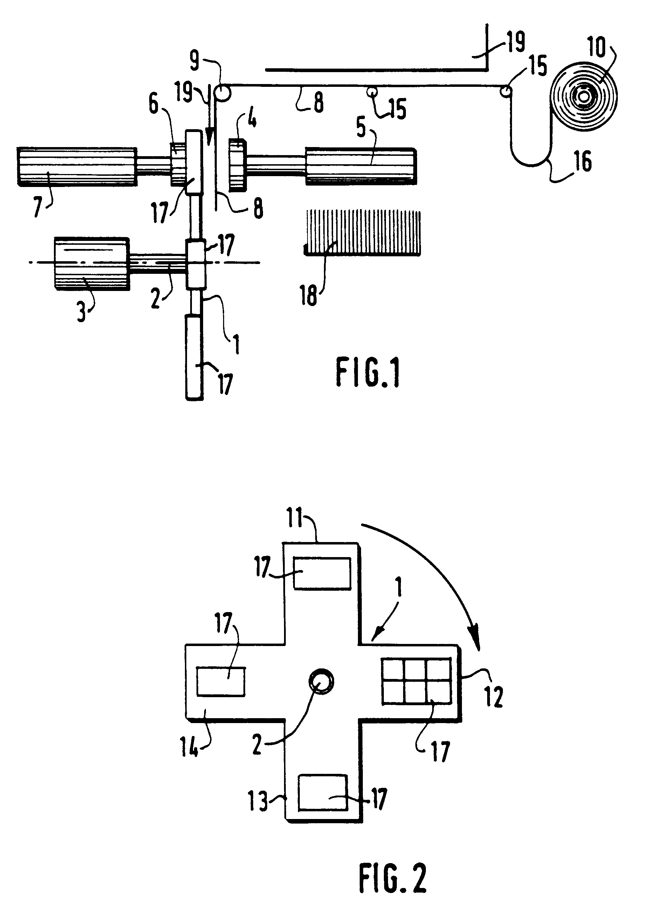

Sur la figure 1, on voit que la machine comprend à l'intérieur d'un bâti (non représenté) un plateau 1 tournant autour d'un axe horizontal 2 entraîné par un moteur 3. Comme cela apparaît sur la figure 2, le plateau 1 comprend, dans l'exemple représenté, quatre branches 11, 12, 13 et 14. La machine comprend également un piston 4 animé d'un mouvement alternatif horizontal par un vérin hydraulique 5. En regard du piston 4, se trouve un contre piston 6 également animé d'un mouvement alternatif horizontal sous l'action d'un vérin de contre piston 7. La bande de matière plastique 8 est entraînée sans tension par un rouleau 9 et elle tombe verticalement entre le piston 4 et le plateau 1. Elle est avantageusement déroulée à partir d'un rouleau 10 et circule librement sur des rouleaux 15 de guidage après formation d'une boucle de récupération 16 dont le niveau est bien entendu contrôlé électroniquement. La feuille 8 est progressivement chauffée par des éléments 19, d'abord horizontalement puis verticalement de manière à ce que la feuille arrive à une température exactement déterminée en regard du poste de formage. Bien entendu, différents moyens de sécurité telles que des cellules et des sondes thermiques sont disposés tout au long du parcours de la feuille. Après découpe par le piston 4 et thermoformage le reste de la bande 8 est dirigé dans un bac de récupération (non représenté).

Dans ce qui précède il a été question d'un piston 4. Mais bien entendu, ce piston 4 porte avantageusement un certain nombre de reliefs constituant eux-même des pistons pour former simultanément le plus grand nombre possible de récipients. On peut par exemple, avoir six formes pénétrant dans six matrices 17 telle que celle qui est schématiquement représentée sur la branche 12 du plateau 1 sur la figure 2. Chacune des branches 11 à 14 correspond au cours d'un cycle à une opération particulière. Par exemple, le plateau étant représenté dans la position qu'il occupe sur la figure 2, une étiquette est introduite dans la matrice 17 de la branche 11 par un dispositif 18 (figure 1) classique du type à ventouse par exemple. Pendant ce temps, l'étiquette précédente de la pile disposée à l'intérieur de la matrice dans la branche 12 est appliquée contre les parois alors que dans le même temps, le thermoformage est effectué dans la matrice 17 de la branche 13, et que le récipient thermoformé de la branche 14 est évacué vers un poste d'emballage. Les opérations et mécanismes d'introduction de l'étiquette et d'extraction du récipient thermoformé sont courants dans la technique considérée et ne seront pas plus amplement décrits mais l'étiquette introduite à plat est conformée tout au long du cycle pour déterminer le volume dans lequel se fera le formage. L'opération de la machine en temps masqué permet de gagner du temps et d'obtenir une cadence de production qui peut atteindre 20 à 25 coups par minute.

Avec un plateau à quatre branches, le plateau 1 tourne, en principe d'un quart de tour à chaque fois. toutefois, dans le cas d'étiquettes à configuration compliquée le plateau peut tourner par exemple d'un huitième de tour, à chaque pas de manière à accroître le nombre de postes de travail. Il est ainsi possible, dans le cas d'étiquettes de formes complexes de résoudre les problèmes d'entr'axes. Le dispositif 18 saisit l'étiquette et la conforme à l'intérieur du moule. Mais lorsque le récipient à former est profond il peut être utile afin d'éviter une mécanisation sophistiquée d'introduire successivement les étiquettes sur des postes successifs.

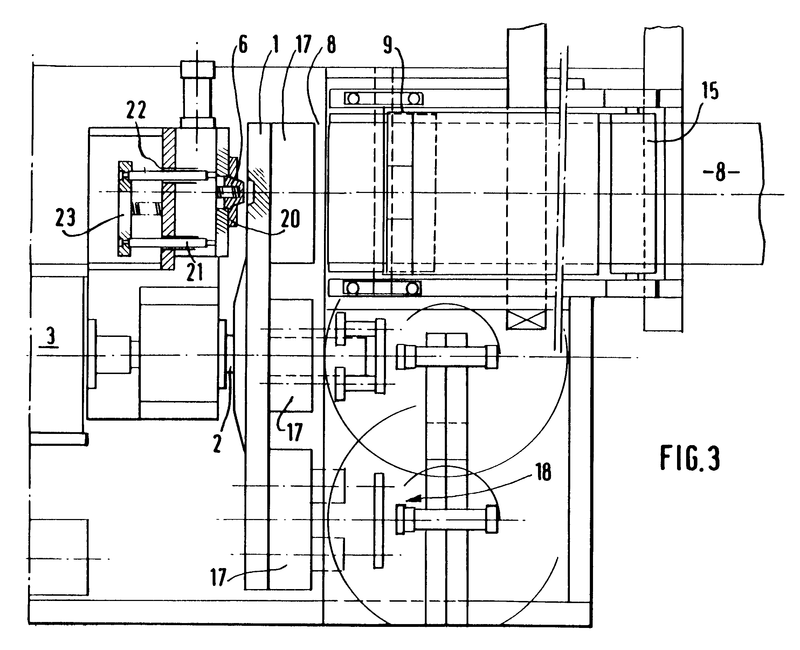

La figure 3 montre plus en détail l'organisation du contre piston 6 qui comprend une plaque de pression 20 guidée par deux tiges 21 coulissant dans des paliers 22, la plaque 23 est entraînée par le piston 7 (non représenté sur la figure 3).

La machine selon la présente invention, permet également de remplacer facilement les outils (formes et matrices) qui sont montés d'une manière amovible respectivement sur le piston et sur le plateau 1. Compte tenu de la contre pression exercée par le contre piston, il est possible de travailler à haute pression et par exemple, en appliquant des pressions de 15 à 20 bars. Et l'on obtient ainsi par thermoformage des pièces de même qualité de celles qui sont normalement obtenues par injection.

## Revendications

1. Machine de thermoformage de matières plastiques comprenant des moyens d'amenée et de chauffage d'une feuille thermoplastique (8) devant un plateau vertical (1) tournant autour d'un axe horizontal (2) portant au moins une matrice (17) et des moyens (4, 5) pour appliquer la feuille (8) à l'intérieur de la matrice (17), le plateau tournant pas à pas devant une pluralité de postes de travail dont un poste d'introduction d'étiquettes, le plateau comprenant un centre à partir duquel s'étendent des branches radiales (11, 12, 13, 14), chacune des branches portant au moins une matrice, caractérisée en ce que la feuille thermoplastique (8) est chauffée horizontalement par des moyens (19) et après passage sur un rouleau (9), tombe sous son propre poids, entre un piston (4) de formage, animé d'un mouvement alternatif, et le plateau (1).

2. Machine selon la revendication 1, caractérisée en ce que l'axe de rotation (2) du plateau (1) est perpendiculaire à la direction de déplacement de la feuille (8), une contre-piston (6) animé d'un mouvement alternatif horizontal sous l'action d'un vérin (7) étant appliqué contre le plateau (1) en synchronisme avec le mouvement du piston (4).

## Claims

1. A machine for thermoforming plastics materials, the machine comprising feed means and heater means for feeding and heating a thermoplastic sheet (8) in front of a vertical turntable (1) rotating about a horizontal axis (2) and having at least one matrix (17), and means (4, 5) for pressing the sheet (8) into the matrix (17), the turntable rotating step by step in front of a plurality of workstations including a label insertion station, the turntable having a center from which there extend radial branches (11, 12, 13, 14) with each of the branches carrying at least one matrix, the machine being characterized in that the thermoplastic sheet (8) is heated horizontally by means (19), and after passing over a roller (9) falls under its own weight between the turntable (1) and a forming piston (4) driven with reciprocating motion.

2. A machine according to claim 1, characterized in that the axis of rotation (2) of the turntable (1) is perpendicular to the displacement direction of the sheet (8), a backing piston (6) driven in reciprocating horizontal motion under drive from an actuator (7) being applied against the turntable (1) synchronously with the motion of the piston (4).

## Patentansprüche

1. Maschine zur Warmverformung von Kunststoff mit Mitteln zur Zufuhr und zur Aufheizung einer thermoplastischen Folie (8) vor einer vertikalen Scheibe (1), die sich um eine horizontale Achse (2) dreht und mindestens eine Matrize (17) und Mittel (4, 5) zum Anlegen der Folie (8) im Inneren der Matrize (17) aufweist, wobei sich die Scheibe schrittweise vor einer Mehrzahl von Arbeitsstationen dreht, von denen eine eine Einführungsstation für Etiketten ist und die Scheibe ein Zentrum besitzt, von dem aus sich radiale Arme (11, 12, 13, 14) erstrecken, von denen jeder mindestens eine Matrize trägt, dadurch gekennzeichnet, daß die thermoplastische Folie (8) horizontal durch Einrichtungen (19) erwärmt wird und nach dem Passieren einer Walze (9) unter ihrem Eigengewicht zwischen einem Verformungskolben (4), der zu einer Hin- und Herbewegung veranlaßt wird, und der Scheibe (1) herunterfällt.

2. Maschine nach Anspruch 1, dadurch gekennzeichnet, daß die Rotationsachse (2) der Scheibe (1) senkrecht auf der Verschiebebewegung der Folie (8) steht, und daß ein Gegenkolben (6) zu einer horizontalen Hin- und Herbewegung unter der Wirkung eines Zylinders (7) veranlaßt und synchron zu der Bewegung des Kolbens (4) gegen die Scheibe gedrückt wird.
